# EUROPÄISCHE PATENTANMELDUNG

(11) **EP 2 093 541 A2**
(43) Veröffentlichungstag der Anmeldung: **26.08.2009**
(21) Anmeldenummer: 09001663.5
(22) Anmeldetag: 06.02.2009
(51) Int. Cl.: G01C 21/36

(54) **Verfahren zum Betrieb eines Navigationsgeräts**

(30) Priorität: 25.02.2008 DE 102008010880; 28.04.2008 DE 102008021235
(71) Anmelder: Navigon AG, 20251 Hamburg (DE)
(72) Erfinder: Meier, Jürgen Dr., 97295 Waldbrunn (DE)
(74) Vertreter: von den Steinen, Axel

(57) **Zusammenfassung**

Die Erfindung betrifft ein Verfahren zum Betrieb eines Navigationsgeräts, umfassend
- eine Eingabeeinrichtung, an der Bedienerbefehle und/oder Ortsangaben, insbesondere Startpunkte und/oder Zielpunkte, eingegeben werden können,
- eine Wegenetzdatenbank,
- eine Routenberechnungseinheit zur Berechnung einer geplanten Route unter Berücksichtigung der Ortsangaben und der Wegenetzdatenbank, wobei die Route vom Startpunkt zum Zielpunkt führt,
- eine Positionsbestimmungseinheit, in der ein anzuzeigender Aufenthaltsort und/oder eine anzuzeigende Bewegungsrichtung berechnet werden,
- eine Anzeigeeinrichtung, an der der anzuzeigende Aufenthaltsort und eine graphische Kartendarstellung der Umgebung des anzuzeigenden Aufenthaltsortes angezeigt werden können, wobei die Orientierung der Kartendarstellung in Abhängigkeit von der anzuzeigenden Bewegungsrichtung verändert wird, wobei
a) in der Positionsbestimmungseinheit eine Änderung der anzuzeigenden Bewegungsrichtung festgestellt wird,
b) eine Verzögerungszeit abgewartet wird,
c) die Orientierung der Kartendarstellung entsprechend der festgestellten Änderung der anzuzeigenden Bewegungsrichtung geändert wird.

## Beschreibung

Die Erfindung betrifft ein Verfahren zum Betrieb eines Navigationsgeräts nach dem Oberbegriff des Anspruchs 1.

Gattungsgemäße Navigationsgeräte werden beispielsweise, jedoch keineswegs ausschließlich, in Kraftfahrzeugen eingesetzt, um den Fahrer von einem Startpunkt zu einem Zielpunkt entlang einer vorberechneten Route zu führen. Start- und Zielpunkt bzw. andere Angaben kann der Fahrer dabei über eine Eingabeeinrichtung an das Navigationsgerät übergeben. Die Berechnung der Route erfolgt aufgrund der Daten einer Wegenetzdatenbank.

An einer Anzeigeeinrichtung, beispielsweise an einem Touchscreen, wird dem Fahrer dann jeweils eine graphische Kartendarstellung in der Umgebung seines Aufenthaltsortes angezeigt, um ihn bei der Ausführung der für die Route notwendigen Manöver zu unterstützen. Der für die Anzeige einer Anzeigeeinrichtung notwendige Aufenthaltsort wird in einer Positionsbestimmungseinheit berechnet, wozu beispielsweise die Daten eines Satellitenempfängers ausgewertet werden.

Bei älteren Navigationsgeräten wurde die anzuzeigende Kartendarstellung jeweils nach Norden ausgerichtet. Diese genordete Kartendarstellung hatte für den Nutzer jedoch während der Routenführung den Nachteil, dass er die dargestellte Kartendarstellung in seiner Vorstellung jeweils drehen musste, da sich das Fahrzeug ja nicht immer in Richtung Norden bewegt. Diese genordete Kartendarstellung fand deshalb nur eine geringe Akzeptanz bei den Nutzern.

In der Weiterentwicklung wurden deshalb Navigationsgeräte vorgeschlagen, bei denen die Orientierung der Kartendarstellung jeweils in Abhängigkeit von der festgestellten Bewegungsrichtung angezeigt wird. Die aktuelle Fahrtrichtung kann dabei auf unterschiedliche Weise bestimmt werden. Entweder werden dazu die aktuellen GPS-Satellitensignale ausgewertet oder die Fahrtrichtung wird in der digitalen Karte eingepasst (map-matched-position). Bei der map-matched-position entspricht die Fahrtrichtung der Richtung des Straßenelements, in dem der aktuelle Aufenthaltsort positioniert ist. In einer Weiterentwicklung wurden auch prognostizierte Aufenthaltsorte bzw. Bewegungsrichtungen verwendet, da die Feststellung des aktuellen Aufenthaltsorts durch Auswertung von Satellitensignalen nur mit einer bestimmten Taktsequenz möglich ist.

Bei der Anzeige der Kartendarstellung wird die Orientierung der Kartendarstellung jeweils in Abhängigkeit von der anzuzeigenden Bewegungsrichtung verändert, so dass beispielsweise die Oberkante der anzuzeigenden Kartendarstellung jeweils in Richtung der aktuellen Bewegungsrichtung weist. Auf diese Weise wird der Fahrer beim intuitiven Verstehen der angezeigten Kartendarstellung unterstützt, da die Blickrichtung des Benutzers regelmäßig ebenfalls genau in Richtung der aktuellen Bewegungsrichtung gerichtet ist. Ein Umdenken durch den Benutzer ist in diesem Falle nicht mehr notwendig, denn die in Bewegungsrichtung ausgerichtete Kartendarstellung ermöglicht es dem Nutzer, die Karte intuitiv zu verstehen, da die Kartendarstellung einer Wahrnehmung in Blickrichtung entspricht. Insbesondere bei Systemen, die eine 2,5 bzw. 3D-Darstellung ermöglichen, ist diese Ausrichtung in Fahrtrichtung unverzichtbar.

Probleme bietet die in Fahrtrichtung ausgerichtete Kartendarstellung jedoch, wenn die der Darstellung zugrunde liegende Bewegungsrichtung nicht korrekt bestimmt ist. Denn eine in die falsche Bewegungsrichtung ausgerichtete Kartendarstellung ist für den Fahrer sehr verwirrend.

Ausgehend von diesem Stand der Technik ist es deshalb Aufgabe der vorliegenden Erfindung, ein neues Verfahren zum Betrieb eines Navigationsgerätes vorzuschlagen, mit dem die intuitive Verständlichkeit der in Bewegungsrichtung ausgerichteten Kartendarstellung verbessert wird.

Diese Aufgabe wird durch ein Verfahren nach der Lehre des Anspruchs 1 gelöst.

Vorteilhafte Ausführungsformen der Erfindung sind Gegenstand der Unteransprüche.

Grundlage des erfindungsgemäßen Verfahrens ist die Erkenntnis, dass die den Fahrer verwirrende Falschdarstellung der Orientierung der angezeigten Karte darauf beruht, dass in einigen Situationen die anzuzeigende Bewegungsrichtung nicht korrekt bestimmt ist. In diesen Fällen wird dann bei den bekannten Navigationsgeräten die Kartendarstellung entsprechend der inkorrekten Bewegungsrichtung verdreht und muss dann anschließend wieder zurückgedreht werden, sobald die Bewegungsrichtung zutreffend festgestellt ist. Dieses Hin- und Herdrehen der Kartendarstellung ist für den Fahrer außerordentlich verwirrend. Zur Vermeidung dieses Effekts wird deshalb erfindungsgemäß vorgeschlagen, nach der Feststellung einer Änderung der anzuzeigenden Bewegungsrichtung zunächst eine Verzögerungszeit abzuwarten, bevor die Kartendarstellung entsprechend der festgestellten Änderung der anzuzeigenden Bewegungsrichtung geändert wird. Vorteil der Erfindung ist die Vermeidung von unnötigen Kartendrehungen, die durch die unrichtig festgestellten Bewegungsrichtungen verursacht werden. Durch das Abwarten einer Verzögerungszeit können im Ergebnis die Fehler bei der Feststellung der anzuzeigenden Bewegungsrichtung ausgefiltert werden, so dass falsche Bewegungsrichtungen gar nicht mehr oder nur noch sehr selten zur Grundlage einer Änderung der Kartenorientierung gemacht werden.

Besonders große Vorteile bietet das erfindungsgemäße Verfahren, wenn der anzuzeigende Aufenthaltsort bzw. die anzuzeigende Bewegungsrichtung in einer Prognoseeinheit prognostiziert wird, weil beispielsweise die Feststellung des aktuellen Aufenthaltsortes durch Auswertung von Sensorsignalen, insbesondere Satellitensignalen, nur getaktet bzw. zeitverzögert möglich ist. Denn die Prognose eines Aufenthaltsortes bzw. der Bewegungsrichtung ist naturgemäß fehlerbehaftet. Die Prognose des Aufenthaltsortes bzw. der Bewegungsrichtung geht von dem letzten durch Empfang und Auswertung von Positionssignalen festgestellten Aufenthaltsort aus und prognostiziert aufgrund dieses letzten durch Sensorsignale festgestellten Aufenthaltsortes einen neuen Aufenthaltsort. Dazu können beispielsweise die Informationen über die Geschwindigkeit des Fahrzeuges, den Verlauf der aktuell befahrenen Straßensegmente oder den Verlauf der geplanten Route einbezogen werden. Insbesondere kann durch die Prognose des Aufenthaltsortes bzw. die Prognose der Fahrtrichtung die Verzögerung in der GPS-Positionsbestimmung kompensiert werden. Um die naturgemäß fehlerbehaftete Bestimmung des Aufenthaltsortes bzw. der Bewegungsrichtung nicht zur Grundlage der Drehung der Kartendarstellung zu machen, ist das Abwarten einer Verzögerungszeit ein einfaches und sehr gut geeignetes Mittel.

Wie lange die Verzögerungszeit ist, um die die erfindungsgemäße Verzögerung der Drehung der Kartendarstellung dauert, ist grundsätzlich beliebig. Nach einer ersten Verfahrensvariante ist vorgesehen, dass die Verzögerungszeit jeweils eine fest vorgegebene Zeitspanne ab dem Zeitpunkt der festgestellten Änderung der anzuzeigenden Bewegungsrichtung beträgt. Die Verzögerungszeit kann dabei beispielsweise in einem Zeithorizont von 0,5 Sekunden bis 5 Sekunden liegen. Diese Verzögerung von wenigen Sekunden ist für den Fahrer einerseits nicht von Nachteil und ermöglicht zugleich die Ausfilterung von fast allen Fehlern bei der Bestimmung der aktuellen Bewegungsrichtung.

Nach einer alternativen Verfahrensvariante ist eine variable Verzögerungszeit vorgesehen. Diese variable Verzögerungszeit richtet sich dabei jeweils danach, wie lange es dauert, die Bewegungsrichtung durch erneute Auswertung von Positionssignalen mit der Zeitsignalempfangseinheit zu bestimmen. Dies bedeutet mit anderen Worten, dass bei dieser Verfahrensvariante mit der Drehung der anzuzeigenden Kartendarstellung jeweils abgewartet wird, bis die Bewegungsrichtung durch Auswertung der Sensorsignale bestimmt wurde. Fehler durch die Prognostizierung der Bewegungsrichtung werden dadurch komplett eliminiert.

Um den Fahrer während der Verzögerungszeit trotzdem über die aktuell bestimmte Bewegungsrichtung, die beispielsweise auf einer Prognose beruht, zu informieren, kann die Orientierung des Symbols zur Darstellung des Aufenthaltsortes, beispielsweise eines Pfeilsymbols, jeweils entsprechend der prognostizierten Bewegungsrichtung geändert werden. Wurde durch Prognose der Bewegungsrichtung beispielsweise festgestellt, dass sich das Fahrzeug seit der letzten Positionsbestimmung um 45° gedreht hat, so wird auch das Pfeilsymbol zur Darstellung des aktuellen Aufenthaltsortes in der anzuzeigenden Karte um 45° gedreht. Erst wenn dieses Ergebnis durch Auswertung von Positionssignalen, beispielsweise GPS-Satellitensignalen, bestätigt ist, wird die gesamte Kartendarstellung um 45° gedreht. Das Symbol zur Darstellung des Aufenthaltsortes wird nach Drehung der Orientierung der Kartendarstellung selbstverständlich zurückgedreht. Dadurch werden die Orientierung der Kartendarstellung und die Orientierung des Symbols zur Darstellung des Aufenthaltsortes wieder in Einklang gebracht.

Die Änderung der Orientierung der angezeigten Kartendarstellung kann selbstverständlich jeweils in einem Schritt durchgeführt werden, so dass entsprechend der Bildwechselfrequenz der eingesetzten Anzeigeeinrichtung eine gestufte Darstellung der Änderung der Kartenorientierung erfolgt. Da erfindungsgemäß eine bestimmte Verzögerungszeit bei der Änderung der Orientierung der anzuzeigenden Karte abgewartet wird, kann die Anzeige der Änderung der Kartenorientierung dadurch verbessert werden, dass die Änderung der Orientierung der angezeigten Kartendarstellung in mehreren Schritten oder sogar quasi kontinuierlich erfolgt. Die Drehung der Kartendarstellung erfolgt also dann nicht mehr in einem Schritt, sondern in mehreren Stufen oder quasi kontinuierlich, so dass sich eine entsprechend gleitende Drehbewegung der Kartendarstellung bei der Anzeige an der Anzeigeeinrichtung ergibt.

Verschiedene Aspekte der Erfindung sind in den Zeichnungen schematisch dargestellt und werden nachfolgend beispielhaft erläutert.

Es zeigen:
- **Fig. 1**: den Vergleich einer konventionellen Kartendarstellung und einer erfindungsgemäßen Kartendarstellung bei Anzeige eines ersten Manövers in drei Schritten;
- **Fig. 2**: den Vergleich einer konventionellen Kartendarstellung und der erfindungsgemäßen Kartendarstellung bei Durchführung eines zweiten Manövers in drei Schritten.

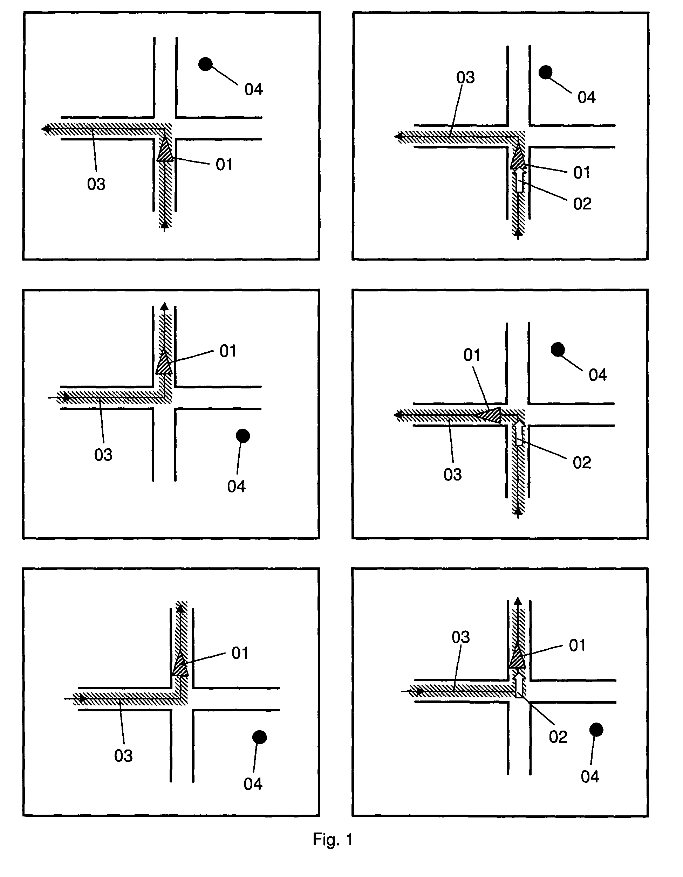

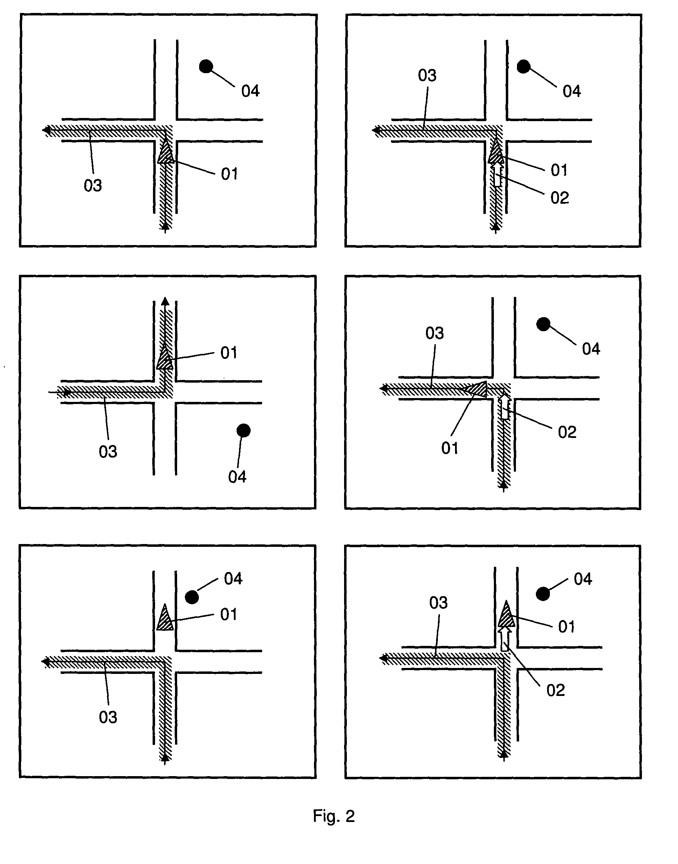

In **Fig. 1** und **Fig. 2** sind auf der linken Seite jeweils die konventionelle Weise zur Anzeige eines Manövers und auf der rechten Seite die erfindungsgemäße Anzeige eines Manövers im Vergleich dargestellt. Das erste Pfeilsymbol 01 symbolisiert dabei jeweils einen prognostizierten Aufenthaltsort und eine prognostizierte Fahrtrichtung. Das Pfeilsymbol 02 symbolisiert dagegen den durch Auswertung von GPS-Satellitensignalen festgestellten aktuellen Aufenthaltsort, der aufgrund der getakteten Satellitensignalauswertung jeweils nur zeitverzögert festgestellt werden kann. Außerdem ist die jeweils geplante Route als Routenspur 03 eingezeichnet. Um die Orientierung der Kartendarstellung in der Anzeigeeinrichtung darzustellen, ist in **Fig. 1** und **Fig. 2** jeweils ein Orientierungspunkt 04 eingezeichnet.

Das in **Fig. 1** konventionell bzw. erfindungsgemäß dargestellte Manöver zeigt einen Linksabbiegevorgang, bei dem der geplanten Routenspur 03 gefolgt wird. Bei der konventionellen Anzeige befindet sich das Fahrzeug im obersten Bild noch vor der Kreuzung, und die angezeigte Kartendarstellung entspricht der prognostizierten Fahrtrichtung. Sobald, wie im mittleren Bild dargestellt, der prognostizierte Aufenthaltsort und die prognostizierte Fahrtrichtung hinter der Kreuzung liegen, wird die Kartendarstellung um 90° gedreht, so dass die Orientierung der Kartendarstellung wiederum der prognostizierten Fahrtrichtung entspricht. Folgt das Fahrzeug dann der geplanten Route, wird die Kartenorientierung weiterhin beibehalten.

Die drei Kartendarstellungen auf der rechten Seite entsprechen der Kartendarstellung gemäß dem erfindungsgemäßen Verfahren. Im obersten Bild ist wiederum die Situation vor Erreichen der Kreuzung dargestellt, wobei die Orientierung der Kartendarstellung der zuletzt durch Auswertung der GPS-Positionssignale entsprechenden Fahrtrichtung entspricht.

Ergibt die Positionsprognose einen Abbiegevorgang, wie dies durch das Pfeilsymbol 01 in der mittleren Kartendarstellung angezeigt ist, so wird die Kartendarstellung zunächst nicht um 90° gedreht, wie beim konventionellen Anzeigeverfahren, sondern es wird zunächst um eine Verzögerungszeit abgewartet. Erst wenn, wie im unteren Bild dargestellt, durch Auswertung der GPS-Positionssignale sicher festgestellt ist, dass das Fahrzeug nach links abgebogen ist, wird die Kartendarstellung um 90° im Uhrzeigersinn gedreht, so dass die Kartenorientierung wieder mit der festgestellten Bewegungsrichtung übereinstimmt.

**Fig. 2** stellt den Unterschied zwischen der erfindungsgemäßen Kartendarstellung und der konventionellen Kartendarstellung beim ungeplanten Verlassen einer Route dar. Wiederum entspricht die geplante Route einem Linksabbiegemanöver. Bei der konventionellen Kartendarstellung würde, wie im mittleren Bild dargestellt, aufgrund der Aufenthaltsprognose zunächst eine Drehung der Kartendarstellung um 90° im Uhrzeigersinn erfolgen. Wird dann durch Auswertung der GPS-Satellitensignale festgestellt, dass das Fahrzeug gar nicht links abgebogen ist, sondern durch Geradeausfahrt an der Kreuzung die Route verlassen hat, muss die Kartendarstellung wieder um 90° entgegen dem Uhrzeigersinn zurückgedreht werden.

Bei der erfindungsgemäßen Kartendarstellung, wie sie auf der rechten Seite von **Fig. 2** schematisiert dargestellt ist, wird diese unerwünschte und für den Fahrer verwirrende Verdrehung der Kartendarstellung vermieden. Wiederum ergibt die Prognose des Aufenthaltsortes einen Linksabbiegevorgang, wobei jedoch die Kartendarstellung zunächst nicht gedreht wird (mittleres Bild), sondern auf die nächste Auswertung der GPS-Satellitensignale gewartet wird. Ergibt diese dann, dass der Fahrer die Route verlassen hat und nicht links abgebogen ist, sondern geradeaus über die Kreuzung fuhr, wird keine Drehung der Kartendarstellung vorgenommen, da die Fahrtrichtung weiterhin mit der Kartenorientierung übereinstimmt.

## Patentansprüche

1. Verfahren zum Betrieb eines Navigationsgeräts, umfassend
- eine Eingabeeinrichtung, an der Bedienerbefehle und/oder Ortsangaben, insbesondere Startpunkte und/oder Zielpunkte, eingegeben werden können,
- eine Wegenetzdatenbank,
- eine Routenberechnungseinheit zur Berechnung einer geplanten Route unter Berücksichtigung der Ortsangaben und der Wegenetzdatenbank, wobei die Route vom Startpunkt zum Zielpunkt führt,
- eine Positionsbestimmungseinheit, in der ein anzuzeigender Aufenthaltsort und/oder eine anzuzeigende Bewegungsrichtung berechnet werden,
- eine Anzeigeeinrichtung, an der der anzuzeigende Aufenthaltsort und eine graphische Kartendarstellung der Umgebung des anzuzeigenden Aufenthaltsortes angezeigt werden können, wobei die Orientierung der Kartendarstellung in Abhängigkeit von der anzuzeigenden Bewegungsrichtung verändert wird,
**dadurch gekennzeichnet,**
**dass**
a) in der Positionsbestimmungseinheit eine Änderung der anzuzeigenden Bewegungsrichtung festgestellt wird,
b) eine Verzögerungszeit abgewartet wird,
c) die Orientierung der Kartendarstellung entsprechend der festgestellten Änderung der anzuzeigenden Bewegungsrichtung geändert wird.

2. Verfahren nach Anspruch 1,
**dadurch gekennzeichnet,**
**dass** die Positionsbestimmungseinheit eine Signalempfangseinheit und eine Prognoseeinheit umfasst, wobei mit der Signalempfangseinheit der Aufenthaltsort durch Empfang und Auswertung von Positionssignalen, insbesondere Satellitensignalen, bestimmt wird, und
wobei mit der Prognoseeinheit ausgehend zumindest vom letzten durch Positionsbestimmung ermittelten Aufenthaltsort ein anzuzeigender, vermutlicher Aufenthaltsort prognostiziert wird.

3. Verfahren nach Anspruch 2,
**dadurch gekennzeichnet,**
**dass** mit der Prognoseeinheit eine anzuzeigende, vermutliche Bewegungsrichtung prognostiziert wird.

4. Verfahren nach einem der Ansprüche 1 bis 3,
**dadurch gekennzeichnet,**
**dass** an der Anzeigeeinrichtung in der angezeigten Kartendarstellung der von der Prognoseeinheit prognostizierte, vermutliche Aufenthaltsort angezeigt wird, wobei die Änderung der Orientierung der angezeigten Kartendarstellung um eine Verzögerungszeit verzögert wird.

5. Verfahren nach einem der Ansprüche 1 bis 4,
**dadurch gekennzeichnet,**
**dass** die Verzögerungszeit einer fest vorgegebenen Zeitspanne entspricht, insbesondere, dass die Verzögerungszeit 0,5 Sekunden bis 5 Sekunden ab dem Zeitpunkt der festgestellten Änderung der anzuzeigenden Bewegungsrichtung beträgt.

6. Verfahren nach einem der Ansprüche 1 bis 5,
**dadurch gekennzeichnet,**
**dass** die Änderung der Orientierung der angezeigten Kartendarstellung mit variabler Verzögerungszeit so lange verzögert wird, bis die Bewegungsrichtung durch erneute Auswertung von Positionssignalen mit der Signalempfangseinheit bestimmt ist.

7. Verfahren nach einem der Ansprüche 1 bis 6,
**dadurch gekennzeichnet,**
**dass** an der Anzeigeeinrichtung in der angezeigten Kartendarstellung die von der Prognoseeinheit prognostizierte Bewegungsrichtung **dadurch** angezeigt wird, dass die Orientierung des Symbols zur Darstellung des Aufenthaltsorts entsprechend der mit der Prognoseeinheit prognostizierten Bewegungsrichtung geändert wird.

8. Verfahren nach einem der Ansprüche 1 bis 7,
**dadurch gekennzeichnet,**
**dass** die Änderung der Orientierung der angezeigten Kartendarstellung entsprechend der festgestellten Änderung der Bewegungsrichtung in mehreren Schritten oder kontinuierlich erfolgt.
